# EUROPÄISCHE PATENTANMELDUNG

(11) **EP 2 950 254 A1**
(43) Veröffentlichungstag der Anmeldung: **02.12.2015**
(21) Anmeldenummer: 14170566.5
(22) Anmeldetag: 30.05.2014
(51) Int. Cl.: G06Q 20/10

(54) **Transaktionsautorisierungssystem**

(71) Anmelder: Deutsche Telekom AG, 53113 Bonn (DE)
(72) Erfinder: Martin, Tobias, 35466 Rabenau (DE); Haberkorn, Günter, 92262 Birgland/Schwend (DE); Schenk, Volker, 53881 Euskirchen (DE)
(74) Vertreter: Klinski, Robert

(57) **Zusammenfassung**

Die Erfindung betrifft ein Transaktionsautorisierungssystem (10), umfassend: ein mobiles Kommunikationsgerät (300), das ausgelegt ist, eine erste Transaktionsnummer (STAN, 800) unter Verwendung eines kryptographischen Algorithmus basierend auf einer Zufallszahl (RAND, 700) und einem geheimen Schlüssel (KTAN, 330) zu erzeugen; eine Netzwerkentität (100), die ausgelegt ist, eine zweite Transaktionsnummer (XTAN, 900) unter Verwendung einer Beziehung zwischen einer Identifikation (ID, 500) des mobilen Kommunikationsgeräts (300) und dem geheimen Schlüssel (KTAN, 330) und unter Verwendung des kryptographischen Algorithmus basierend auf der Zufallszahl (RAND, 700) und dem geheimen Schlüssel (KTAN, 330) zu erzeugen; und einen Bankserver (200), der ausgelegt ist, eine Transaktion (600) basierend auf einer Übereinstimmung der zweiten Transaktionsnummer (XTAN, 900) mit der ersten Transaktionsnummer (STAN, 800) zu autorisieren.

## Beschreibung

Die vorliegende Erfindung betrifft ein Transaktionsautorisierungssystem und ein Verfahren zum Autorisieren einer Transaktion.

Im Online-Banking werden unterschiedliche Verfahren zur Verteilung bzw. Erzeugung von geheimen Transaktionsnummern (TANs) eingesetzt, mit denen die Transaktionen durch den Kontoinhaber autorisiert werden. Ein bekanntes und weit verbreitetes Verfahren ist das so genannte mTAN-Verfahren (mobile TransAction Number). Beim mTAN-Verfahren registriert der Bankkunde bei seiner Bank seine Mobilfunkrufnummer (MSISDN, Mobile Subscriber Integrated Services Digital Number). Soll nun eine Transaktion autorisiert werden, beispielsweise eine Geldüberweisung, dann sendet die Bank eine Kurznachricht (SMS) mit der mTAN (meist eine sechsstellige zufällige Ziffernfolge) an das Mobilfunkendgerät des Bankkunden. Dieser liest die mTAN vom Display seines Endgeräts ab und überträgt die Ziffernfolge in die Online-Banking-Anwendung, um die Transaktion zu autorisieren.

Das mTAN-Verfahren galt lange als sicher, da zwei getrennte Übertragungskanäle genutzt wurden: Zum ersten das Internet zur Kommunikation der Online-Banking-Anwendung mit der Bank und zum zweiten ein Mobilfunknetz zur Übertragung der mTAN. In letzter Zeit wurden von Betrügern jedoch erfolgreich Angriffe auf dieses Verfahren durchgeführt, um unberechtigterweise Transaktionen auf deren eigenes Bankkonto durchzuführen. Diese Angriffe wurden durch die zunehmende Verbreitung von Smartphones ermöglicht, auf denen Schadsoftware durch Betrüger installiert werden kann. Bei diesen Angriffen wird üblicherweise zunächst die Online-Banking-Website bzw. der Webbrowser des Bankkunden mit einer Schadsoftware (Virus, Trojaner, etc.) infiziert, die die Zugangsdaten für das Online-Banking abfängt und an den Betrüger überträgt. Außerdem erhält der Bankkunde eine Meldung auf dem Bildschirm, dass ein sogenanntes "Sicherheitsupdate" seines Smartphones erforderlich sei. Durch diesen (oder einen ähnlichen) Social-Engineering-Angriff wird der Bankkunde dazu verleitet, auf seinem Smartphone eine Schadsoftware zu installieren, die letztendlich die von der Bank übertragene Transaktionsnummer (mTAN) abfängt und an den Betrüger weiterleitet. Somit kann der Betrüger im Namen des Bankkunden Transaktionen durchführen.

Es ist die Aufgabe der vorliegenden Erfindung, das mTAN Verfahren sicherer zu gestalten.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Transaktionsautorisierungssysteme und Verfahren zum Autorisieren einer Transaktion basieren auf Transaktionsnummern, insbesondere mTAN Nummern. Eine Transaktionsnummer (TAN) ist ein Einmalpasswort, das beispielsweise aus sechs Dezimalziffern bestehen kann und vorwiegend im Online-Banking verwendet wird. Bei der mobilen TAN (mTAN) Nummer, die auch als smsTAN Nummer bezeichnet wird, wird der Übertragungskanal "Mobilfunknetz" oder "SMS" mit eingebunden. Dem Onlinebanking-Kunden wird nach Übersendung der ausgefüllten Überweisung im Internet seitens der Bank per SMS eine nur für diesen Vorgang verwendbare TAN auf sein mobiles Kommunikationsgerät, meist sein Mobiltelefon oder ein Tablet PC mit Mobilfunkmodul, gesendet. Der Auftrag kann anschließend mit dieser TAN bestätigt werden.

Die im Folgenden vorgestellten Transaktionsautorisierungssysteme und Verfahren zum Autorisieren einer Transaktion können auf einer Nahfeldkommunikation (NFC, Near Field Communication) basieren. Die Nahfeldkommunikation ist ein internationaler Übertragungsstandard zum kontaktlosen Austausch von Daten per Funktechnik über kurze Strecken von beispielsweise wenigen Zentimetern und einer Datenübertragungsrate beispielsweise im Bereich von 424 kBit/s.

Die im Folgenden vorgestellten Transaktionsautorisierungssysteme und Verfahren zum Autorisieren einer Transaktion können bei Online-Banking Anwendungen eingesetzt werden. Online-Banking, Electronic Banking, E-Banking, Home Banking oder Elektronisches Bankgeschäft (E-Bank) ist die Abwicklung von Bankgeschäften über Datenleitungen mit Hilfe von PCs, Smartphones, Notebooks, Tablet PCs und anderen elektronischen Endgeräten und/oder über Telefonverbindungen mit Hilfe von Telefonen und Faxgeräten (Telebanking, Telefonbanking oder Phone-Banking).

Die im Folgenden vorgestellten Transaktionsautorisierungssysteme und Verfahren zum Autorisieren einer Transaktion können in UICCs, Chipkarten, SIM-Karten und Multi-SIM-Karten angewendet werden. Die UICC (Universal Integrated Circuit Card) ist eine Chipkarte bzw. Smartcard, die in mobilen Kommunikationsgeräten, beispielsweise für GSM, UMTS und LTE Kommunikationsnetze eingesetzt wird. Die UICC gewährleistet Integrität und Sicherheit aller Arten von persönlichen Daten und kann beispielsweise Daten im Bereich mehrerer hundert Kilobyte und mehr speichern.

Multi-SIM bezeichnet das Verfahren eines Herstellers, bei dem zum selben Mobilfunkanschluss mehrere SIM-Karten für verschiedene Geräte (z. B. Handy, Autotelefon, Tablet-PC) ausgegeben werden. Es handelt sich um dieselbe Rufnummer und denselben Provider (Telekom). Bei einem anderen Hersteller heißt das analoge Verfahren "UItraCard".

Die im Folgenden vorgestellten Transaktionsautorisierungssysteme und Verfahren zum Autorisieren einer Transaktion basieren auf kryptographischen Algorithmen, Zufallszahlen und geheimen Schlüsseln. Ein kryptographischer Algorithmus ermöglicht es, mit Hilfe einer über einen unsicheren Kanal übertragenen Nachricht, beispielsweise einer Zufallszahl, eine sichere Authentifizierung durchzuführen. Der kryptographische Algorithmus kann dabei basierend auf einem Challenge-Response-Protokoll implementiert sein, das wie folgt abläuft: Vorab tauschen die Kommunikationspartner Alice und Bob einen geheimen Schlüssel aus. Möchte sich zu einem späteren Zeitpunkt Alice gegenüber Bob authentifizieren, dann sendet Bob an Alice eine Zufallszahl (Challenge, vorzugsweise hinreichend groß, um Kollisionen mit vorher übertragenen Zufallszahlen zu vermeiden) über einen unsicheren Kanal. Alice wendet eine Einwegfunktion (One-Way-Funktion) an und berechnet mit Hilfe der Challenge und des geheimen Schlüssels eine andere Zahl (Response), die zurück an Bob übertragen wird. Bob führt dieselbe Berechnung durch, ohne die Response zu übertragen. Stimmen die von Alice berechnete Response (SRES, Signed Response, im Folgenden auch als erste Transaktionsnummer bezeichnet) und die von Bob berechnete Response (XRES, eXpected Response oder erwartete Antwort, im Folgenden auch als zweite Transaktionsnummer bezeichnet) überein, dann ist Alice erfolgreich authentifiziert, da nur sie mit Kenntnis des geheimen Schlüssels die korrekte SRES berechnen konnte. Aufgrund der Einweg-Eigenschaft der One-Way-Function bzw. Einwegfunktion ist es einem Angreifer nicht möglich, aus der übertragenen Response SRES den geheimen Schlüssel zu rekonstruieren. Eine Einwegfunktion ist eine mathematische Funktion, die komplexitätstheoretisch leicht berechenbar, aber schwer umzukehren ist. Als Einwegfunktionen werden auch Funktionen bezeichnet, zu denen keine in angemessener Zeit praktisch ausführbare Umkehrung berechenbar ist.

Als Schlüssel oder geheimer Schlüssel wird eine Information bezeichnet, die einen kryptographischen Algorithmus parametrisiert. Es kann sich dabei um ein Kennwort oder eine Bitfolge handeln. Der Schlüssel kann dazu genutzt werden, um einen Klartext zu verschlüsseln und einen Geheimtext zu erhalten und/oder um aus dem Geheimtext durch Entschlüsselung wieder den Klartext zu gewinnen.

Beispiele für einen kryptographischen Algorithmus sind der Authentisierungsalgorithmus A3/A8 oder der Verschlüsselungsalgorithmus DES bzw. 3DES. Der Algorithmus A3/A8 berechnet aus dem geheimen Teilnehmerschlüssel K und einer Zufallszahl RAND eine sogenannte "signed response" SRES, auch unterschriebene Antwort bezeichnet. Der Algorithmus DES bzw. 3DES wird genutzt, um einen Klartext mit Hilfe eines geheimen Schlüssel zu verschlüsseln und daraus einen Geheimcode abzuleiten.

Die im Folgenden vorgestellten Transaktionsautorisierungssysteme und Verfahren zum Autorisieren einer Transaktion können einen kryptographischen Algorithmus in der UICC einsetzen sowie in einer Ausgestaltung zusammen mit einem NFC-fähigen Smartphone nutzen.

Die im Folgenden vorgestellten Transaktionsautorisierungssysteme und Verfahren zum Autorisieren einer Transaktion können in Netzwerkentitäten, insbesondere Netzwerkentitäten von Netzwerkbetreibern, insbesondere Mobilfunknetzbetreibern eingesetzt werden. Eine Netzwerkentität bzw. Kommunikationsentität ist eine Einheit, Funktionseinheit oder Instanz in einem Kommunikationsnetzwerk. Eine Netzwerk- oder Kommunikationsentität kann Signale von einem Kommunikationsnetzwerk empfangen und/oder Signale in das Kommunikationsnetzwerk senden. Eine Netzwerk- oder Kommunikationsentität kann beispielsweise ein Server, ein Netzwerkknoten, ein Netzwerkabschluss oder ein Netzwerkadapter sein. Eine Netzwerk- oder Kommunikationsentität kann Hardware und/oder Software umfassen, um die technischen Funktionen der Netzwerkentität zu realisieren. Die Netzwerk- oder Kommunikationsentität kann Mikroprozessoren, Mikrochips, ASICs (Application Specific Integrated Circuits bzw. anwenderspezifische integrierte Schaltkreise) und/oder DSPs (Digitale Signalprozessoren) umfassen.

Die im Folgenden vorgestellten Transaktionsautorisierungssysteme und Verfahren zum Autorisieren einer Transaktion können in mobilen Kommunikationsgeräten, beispielsweise Smartphones, Mobiltelefonen, Tablet PCs, Notebooks, Laptops und Rechnern mit Mobilfunkadapter eingesetzt werden.

Die im Folgenden vorgestellten Transaktionsautorisierungssysteme und Verfahren zum Autorisieren einer Transaktion können in Kommunikationsnetzen mit Benachrichtigungsfunktion (beispielsweise SMS), beispielsweise in digitalen Telefonnetzen mit SMS-Funktion oder in Mobilfunknetzen, beispielsweise GSM, UMTS, LTE genutzt werden.

Um die Erfindung im Detail zu beschreiben, werden die folgenden Abkürzungen und Bezeichnungen verwendet:
- TAN:: Transaktionsnummer.
- mTAN:: mobile Transaktionsnummer.
- SIM:: Subscriber Identification Module, Teilnehmeridentitätsmodul. Die SIM-Karte ist eine Chipkarte, die in ein Mobiltelefon eingesteckt wird und zur Identifikation des Nutzers im Netz dient.
- Multi-SIM:: Bei Multi-SIM werden mehrere SIM-Karten zum selben Mobilfunkanschluss, also mit derselben Telefonnummer in verschiedenen Geräten verwendet.
- MSISDN:: Mobile Subscriber Integrated Services Digital Number, Mobilfunkrufnummer
- SRES:: "Signed RESponse", unterschriebene Antwort, erste Transaktionsnummer.
- XRES:: "eXpected RESponse", erwartete Antwort, zweite Transaktionsnummer.
- NFC:: Near Field Communikation, Nahfeldkommunikation.
- UICC:: Universal Integrated Circuit Card, Chipkarte bzw. Smartcard UICCs lösen seit einiger Zeit die einfacheren SIM-Karten ab; gemeinhin werden die Begriffe "SIM" und "UICC" synonym verwendet.
- IMEI:: International Mobile Equipment Identity, Geräteidentifikation, Hardwareidentifikation.
- IMSI:: International Mobile Subscriber Identity, dient der eindeutigen Identifizierung von Netzteilnehmern (interne Teilnehmerkennung). Neben weiteren Daten wird die IMSI auf einer speziellen Chipkarte, dem so genannten SIM (Subscriber Identity Module), gespeichert.
- MCC:: Mobile Country Code, die ersten drei Ziffern einer IMSI, z. B. MCC=262 für Deutschland.
- MNC:: Mobile Network Code, zwei oder drei Ziffern nach dem MCC für einen bestimmten MNO in einem bestimmten Land, z. B. MCC=262, MNC=02 für Vodafone Deutschland.
- MNO:: Mobile Network Operator, Mobilfunknetzbetreiber.
- SWP:: Single Wire Protocol, siehe ETSI TS 102 613 und ETSI TS 102 622.
- NFC-WI:: NFC Wired Interface, siehe auch Standard ECMA-373.
- ASIC:: Application Specific Integrated Circuit bzw. anwenderspezifischer integrierter Schaltkreis.
- DSP:: Digitaler Signalprozessor.

Gemäß einem Aspekt betrifft die Erfindung ein Transaktionsautorisierungssystem, umfassend: ein mobiles Kommunikationsgerät, das ausgelegt ist, eine erste Transaktionsnummer unter Verwendung eines kryptographischen Algorithmus basierend auf einer Zufallszahl und einem geheimen Schlüssel zu erzeugen; eine Netzwerkentität, die ausgelegt ist, eine zweite Transaktionsnummer unter Verwendung einer Beziehung zwischen einer Identifikation des mobilen Kommunikationsgeräts und dem geheimen Schlüssel und unter Verwendung des kryptographischen Algorithmus basierend auf der Zufallszahl und dem geheimen Schlüssel zu erzeugen; und einen Bankserver, der ausgelegt ist, eine Transaktion basierend auf einer Übereinstimmung der zweiten Transaktionsnummer mit der ersten Transaktionsnummer zu autorisieren.

Ein solches Transaktionsautorisierungssystem bietet den Vorteil, dass ein kryptografischer Algorithmus zum Einsatz kommt, der das Transaktionsautorisierungssystem sicherer macht. Die mTAN wird nicht mehr direkt von dem Bankserver zu dem mobilen Kommunikationsgerät übertragen, beispielsweise über ein unsicheres Mobilfunknetz, sondern es wird lediglich eine Zufallszahl übertragen. Ein Betrüger kann mit der Zufallszahl alleine nichts anfangen ohne den geheimen Schlüssel und den kryptographischen Algorithmus zu kennen.

In einer vorteilhaften Ausführungsform des Transaktionsautorisierungssystems erfolgt die Anwendung des kryptografischen Algorithmus' mit dem geheimen Schlüssel zur Berechnung der ersten Transaktionsnummern in einer sicheren und manipulationsresistenten Ausführungsumgebung, beispielsweise in einem Krypto-Modul, einer Chipkarte, Smart-Card oder UICC.

Gemäß einer Ausführungsform des Transaktionsautorisierungssystems umfasst die Identifikation des mobilen Kommunikationsgeräts eine MSISDN Nummer.

Gemäß einer anderen Ausführungsform des Transaktionsautorisierungssystems umfasst die Identifikation des mobilen Kommunikationsgeräts eine IMSI.

Bei dem MultiSIM-Verfahren besitzen die Haupt-SIM-Karte sowie die zweite und dritte Multi-SIM unterschiedliche IMSIs, die im Home Location Register jedoch derselben MSISDN zugeordnet werden. Dies machen sich Betrüger zunutze, indem sie sich als legitimer Kunde ausgeben und zu einer im Online-Banking genutzten MSISDN eine Multi-SIM bestellen, mit deren Hilfe sie die mTANs abfangen. Gemäß einigen Ausführungsformen ist hier und im Folgenden die IMSI eine alternative Identifikation (einer bestimmten SIM-Karte) anstelle der MSISDN.

Dies macht die Autorisierung der Transaktion noch sicherer, da die zweite Transaktionsnummer unter Verwendung einer Beziehung zwischen der MSISDN Nummer oder IMSI des mobilen Kommunikationsgeräts und dem geheimen Schlüssel und unter Verwendung des kryptographischen Algorithmus' basierend auf der Zufallszahl und dem geheimen Schlüssel erzeugt wird. Ein Angreifer müsste somit zusätzlich die MSISDN Nummer oder IMSI des mobilen Kommunikationsgeräts kennen.

Gemäß einer Ausführungsform des Transaktionsautorisierungssystems ist der Bankserver ausgelegt, die Zufallszahl über ein Mobilfunknetz zu dem mobilen Kommunikationsgerät zu übertragen. Gemäß einer Ausführungsform des Transaktionsautorisierungssystems ist das mobile Kommunikationsgerät ausgelegt, die erste Transaktionsnummer zu dem Bankserver zu übertragen. Gemäß einer Ausführungsform des Transaktionsautorisierungssystems ist der Bankserver ausgelegt, die Zufallszahl und die Identifikation des mobilen Kommunikationsgeräts über ein gesichertes Protokoll zu der Netzwerkentität zu übertragen. Gemäß einer Ausführungsform des Transaktionsautorisierungssystems ist die Netzwerkentität ausgelegt, die zweite Transaktionsnummer über das gesicherte Protokoll zu dem Bankserver zu übertragen.

Dies bietet den Vorteil, dass die Übertragungsstrecke zwischen Bankserver und Netzwerkentität (des MNO) durch das gesicherte Protokoll eine weitere Sicherheit des Transaktionsverfahrens gegen Angriffe von außen bietet, zugleich aber die Flexibilität beibehält, dass der Bankkunde durch das an das Mobilfunknetz angeschlossene mobile Kommunikationsgerät von überall aus seine Bankgeschäfte erledigen kann.

Gemäß einer Ausführungsform des Transaktionsautorisierungssystems ist der Bankserver ausgelegt, die Zufallszahl basierend auf Daten der Transaktion, insbesondere einem Betrag der Transaktion, einer Kontonummer, einer IBAN, einer Bankleitzahl und/oder einer BIC zu erzeugen.

Dies erhöht die Sicherheit der Transaktion noch weiter, denn eine Zufallszahl, die basierend auf den Daten der Transaktion erzeugt wird, kann für keine andere Transaktion verwendet werden, beispielsweise eine betrügerische Transaktion mit einem höheren Betrag auf ein anderes Konto.

Gemäß einer Ausführungsform des Transaktionsautorisierungssystems ist der Bankserver ausgelegt, die Zufallszahl basierend auf einer Geräteidentifikation des mobilen Kommunikationsgeräts, insbesondere einer IMEI Nummer zu erzeugen.

Dies macht die Autorisierung der Transaktion noch sicherer, da dann ein Betrüger die IMEI Nummer des mobilen Kommunikationsgeräts kennen müsste. Dazu müsste der Betrüger das mobile Kommunikationsgerät in Ansicht nehmen, beispielsweise stehlen. Eine Autorisierung der Transaktion mit einem anderen Gerät wäre dann nicht mehr möglich.

Gemäß einer Ausführungsform des Transaktionsautorisierungssystems wird die Zufallszahl abhängig von zumindest einer der folgenden Daten erzeugt: Betrag, IBAN, BIC, IMSI und IMEI. Gemäß einer Ausführungsform des Transaktionsautorisierungssystems wird die Zufallszahl abhängig von einer Kombination von Betrag, Konto, IMSI und IMEI erzeugt.

Gemäß einer Ausführungsform des Transaktionsautorisierungssystems wird von dem Bankserver eine erste Zufallszahl übertragen, die aus einem Hash eine oder mehrerer der folgenden Größen besteht: aktuelles Datum, Tageszeit, Betrag, IMSI, IBAN und BIC oder eine Kombination aus diesen umfasst. Gemäß einer Ausführungsform fügt das mobile Kommunikationsgerät bzw. die TAN-Applikation im Mobilfunkgerät zu dieser ersten Zufallszahl die IMEI hinzu und bildet einen Hash, der als zweite Zufallszahl in den TAN-Algorithmus bzw. kryptographischen Algorithmus zur Berechnung der STAN eingeht. Das mobile Kommunikationsgerät ist somit ausgelegt, die erste Transaktionsnummer STAN unter Verwendung des kryptographischen Algorithmus basierend auf der zweiten Zufallszahl und dem geheimen Schlüssel KTAN zu erzeugen. Gemäß einer Ausführungsform ist der Bankserver ausgelegt, die zweite Zufallszahl und optional die IMEI zu der Netzwerkentität zu übertragen. Gemäß einer Ausführungsform ist die Netzwerkentität ausgelegt, die XTAN basierend auf der zweiten Zufallszahl zu bestimmen.

Dies macht die Autorisierung der Transaktion noch sicherer, da dann ein Betrüger die oben genannten Größen auf denen basierend die zweite Zufallszahl bestimmt wird, kennen müsste.

Gemäß einer Ausführungsform des Transaktionsautorisierungssystems ist der Bankserver ausgelegt, die Netzwerkentität basierend auf der Identifikation des mobilen Kommunikationsgeräts zu identifizieren. Eine Identifikation der Netzwerkentität kann beispielsweise über die Angabe einer Online-Adresse erfolgen.

Die Ermittlung des MNOs aus der MSISDN macht das Transaktionsautorisierungssystem komfortable und leichter bedienbar.

Gemäß einer Ausführungsform des Transaktionsautorisierungssystems ist das mobile Kommunikationsgerät ausgelegt, sich bei dem Bankserver unter Angabe der Identifikation des mobilen Kommunikationsgeräts und einer Identifikation der Netzwerkentität zu registrieren.

Dies bietet den Vorteil, dass der Bankserver dann weiß, von welcher Netzwerkentität bzw. welchem MNO er die zweite Transaktionsnummer erhalten kann.

Gemäß einer Ausführungsform des Transaktionsautorisierungssystems basiert der kryptographische Algorithmus auf einem Challenge-Response Protokoll unter Nutzung einer Einwegfunktion.

Ein kryptographischer Algorithmus mit Challenge-Response Protokoll und Einwegfunktion bietet eine besonders hohe Sicherheit gegen Abhören, da es ohne den geheimen Schlüssel in endlicher Zeit kaum möglich ist, die erste Transaktionsnummer zu fälschen.

Gemäß einer Ausführungsform des Transaktionsautorisierungssystems umfasst das mobile Kommunikationsgerät eine Chipkarte, insbesondere eine SIM-Karte, Multi-SIM-Karte oder UICC, mit einem Mikroprozessor. Gemäß einer Ausführungsform des Transaktionsautorisierungssystems ist das mobile Kommunikationsgerät ausgelegt, die erste Transaktionsnummer in dem Mikroprozessor dieser Chipkarte zu berechnen.

Dies bietet den Vorteil, dass der geheime Schlüssel auf der Chipkarte abhörsicher abgelegt werden kann. Der geheime Schlüssel kann auf der Chipkarte so abgelegt werden, dass es auch mit Zerstörung der Chipkarte nicht möglich ist, an diesen heranzukommen. Des Weiteren kann auch die im Mikroprozessor der Chipkarte berechnete erste Transaktionsnummer nicht durch Manipulation des mobilen Kommunikationsgeräts, beispielsweise durch Schadsoftware auf demselben, nach der Berechnung ausgelesen werden.

Gemäß einer Ausführungsform umfasst das Transaktionsautorisierungssystem ein Online-Terminal, das ausgelegt ist, die erste Transaktionsnummer von dem mobilen Kommunikationsgerät zu empfangen und über das Internet zu dem Bankserver zu übertragen.

Das Online-Terminal bietet den Vorteil, dass zwei getrennte Kommunikationsnetze verwendet werden, zum einen das Mobilfunknetz für die Kommunikation zwischen mobilem Kommunikationsgerät und Bankserver, zum anderen ein zweites Netz, beispielsweise das Internet, für die Kommunikation zwischen Online-Terminal und Bankserver. Diese zwei getrennten Kommunikationsnetze erhöhen weiter die Sicherheit des Transaktionsverfahrens.

Gemäß einer Ausführungsform des Transaktionsautorisierungssystems ist das mobile Kommunikationsgerät ausgelegt, die erste Transaktionsnummer ohne Interaktion mit dem Hauptprozessor, dem Speicher und dem Betriebssystem vom Mikroprozessor der Chipkarte zu dem Online-Terminal zu übertragen.

Dies bietet den Vorteil, dass Schadprogramme wie beispielsweise Viren oder Trojaner, die auf einem Betriebssystem des mobilen Kommunikationsgeräts, d.h. auf dessen Hauptprozessor ausgeführt werden, in die Weitergabe der ersten Transaktionsnummer an das Online-Terminal nicht eingreifen können.

Gemäß einer Ausführungsform des Transaktionsautorisierungssystems umfasst das mobile Kommunikationsgerät ein Display. Gemäß einer Ausführungsform des Transaktionsautorisierungssystems ist das mobile Kommunikationsgerät ausgelegt, die erste Transaktionsnummer nicht-speicherresident unter Umgehung des Hauptprozessors und des Betriebssystems auf dem Display anzuzeigen.

Dies bietet den Vorteil, dass Schadprogramme wie beispielsweise Viren oder Trojaner, die erste Transaktionsnummer nicht abgreifen können, da diese zu keiner Zeit im Speicher des mobilen Kommunikationsgeräts vorliegt.

Gemäß einer Ausführungsform umfasst das Transaktionsautorisierungssystem eine Nahfeldkommunikationsschnittstelle zwischen dem mobilen Kommunikationsgerät und dem Online Terminal. Gemäß einer Ausführungsform des Transaktionsautorisierungssystems ist das mobile Kommunikationsgerät ausgelegt, die erste Transaktionsnummer über die Nahfeldkommunikationsschnittstelle zu dem Online-Terminal zu übertragen ohne die erste Transaktionsnummer auf einem Display anzuzeigen.

Dies bietet den Vorteil, dass Betrüger den Anwender auch nicht dazu verleiten können, die aus dem Display abgelesene erste Transaktionsnummer in irgend einer Form weiterzugeben, da diese Nummer selbst dem Anwender nicht bekannt ist.

Gemäß einer Ausführungsform umfasst das Transaktionsautorisierungssystem eine direkte Verdrahtung zwischen der Chipkarte und der Nahfeldkommunikationsschnittstelle. Gemäß einer Ausführungsform des Transaktionsautorisierungssystems ist die Chipkarte ausgelegt, die erste Transaktionsnummer über die direkte Verdrahtung an die Nahfeldkommunikationsschnittstelle zu übertragen. Gemäß einer Ausführungsform des Transaktionsautorisierungssystems ist die Chipkarte ausgelegt, die erste Transaktionsnummer über die direkte Verdrahtung an die Nahfeldkommunikationsschnittstelle zu übertragen unter Nutzung eines der folgenden Protokolle: Single Wire Protocol, SWP, NFC Wired Interface, NFC-WI.

Dies bietet den Vorteil, dass Schadprogramme wie beispielsweise Viren oder Trojaner, die erste Transaktionsnummer nicht abgreifen können, da diese über die direkte Verdrahtung von der Chipkarte direkt zur NFC Schnittstelle übertragen wird ohne dass die erste Transaktionsnummer im Speicher des mobilen Kommunikationsgeräts abgelegt oder von dessen Hauptprozessor verarbeitet werden muss.

Gemäß einer Ausführungsform des Transaktionsautorisierungssystems umfasst das mobile Kommunikationsgerät ein Smartphone oder einen Tablet PC mit Mobilfunkmodul. Gemäß einer Ausführungsform des Transaktionsautorisierungssystems umfasst die Netzwerkentität einen Server eines Mobilfunknetzbetreibers.

Gemäß einem Aspekt betrifft die Erfindung ein Verfahren zum Autorisieren einer Transaktion, mit folgenden Schritten: Erzeugen einer ersten Transaktionsnummer in einem mobilen Kommunikationsgerät unter Verwendung eines kryptographischen Algorithmus basierend auf einer Zufallszahl und einem geheimen Schlüssel; Erzeugen einer zweiten Transaktionsnummer in einer Netzwerkentität unter Verwendung einer Beziehung zwischen einer Identifikation des mobilen Kommunikationsgeräts und dem geheimen Schlüssel und unter Verwendung des kryptographischen Algorithmus basierend auf der Zufallszahl und dem geheimen Schlüssel; und Autorisieren der Transaktion in einem Bankserver basierend auf einer Übereinstimmung der ersten Transaktionsnummer mit der zweiten Transaktionsnummer.

Ein solches Verfahren bietet den Vorteil, dass ein kryptografischer Algorithmus zum Einsatz kommt, der das Verfahren sicherer macht. Die mTAN wird nicht mehr direkt von dem Bankserver zu dem mobilen Kommunikationsgerät übertragen, beispielsweise über ein unsicheres Mobilfunknetz, sondern es wird lediglich eine Zufallszahl übertragen. Ein Betrüger kann mit der Zufallszahl alleine nichts anfangen ohne den geheimen Schlüssel und den kryptographischen Algorithmus zu kennen. Zudem müsste der Angreifer die Beziehung zwischen der Identifikation des mobilen Kommunikationsgeräts und dem geheimen Schlüssel kennen, was die Sicherheit des Verfahrens noch weiter erhöht.

Gemäß einer Ausführungsform umfasst das Verfahren ferner zumindest einen der Schritte: Übertragen der Zufallszahl über ein Mobilfunknetz von dem Bankserver zu dem mobilen Kommunikationsgerät; Übertragen der ersten Transaktionsnummer von dem mobilen Kommunikationsgerät zu dem Bankserver; Übertragen der Zufallszahl und der Identifikation des mobilen Kommunikationsgeräts von dem Bankserver zu der Netzwerkentität; und Übertragen der zweiten Transaktionsnummer von der Netzwerkentität zu dem Bankserver.

Gemäß einer Ausführungsform des Verfahrens umfasst die Identifikation des mobilen Kommunikationsgeräts eine MSISDN Nummer oder alternativ eine IMSI.

Gemäß einer Ausführungsform umfasst das Verfahren ein Erzeugen der Zufallszahl basierend auf Daten der Transaktion, insbesondere einem Betrag der Transaktion, einer Kontonummer, einer IBAN, einer Bankleitzahl und/oder einer BIC.

Gemäß einer Ausführungsform umfasst das Verfahren ein Erzeugen der Zufallszahl basierend auf einer Geräteidentifikation des mobilen Kommunikationsgeräts, insbesondere einer IMEI Nummer.

Gemäß einer Ausführungsform umfasst das Verfahren ein Erzeugen einer ersten Zufallszahl basierend auf Daten der Transaktion insbesondere einem Betrag der Transaktion, einer Kontonummer, einer IBAN, einer Bankleitzahl und/oder einer BIC, die zum mobilen Kommunikationsgerät übertragen wird. Das mobile Kommunikationsgerät fügt zu dieser ersten Zufallszahl seine Geräteidentifikation, insbesondere die IMEI Nummer hinzu, um eine zweite Zufallszahl zu erzeugen.

Gemäß einer Ausführungsform umfasst das Verfahren ein Identifizieren der Netzwerkentität basierend auf der Identifikation des mobilen Kommunikationsgeräts.

Gemäß einer Ausführungsform umfasst das Verfahren ein Registrieren des mobilen Kommunikationsgeräts bei dem Bankserver unter Angabe der Identifikation des mobilen Kommunikationsgeräts und/oder einer Identifikation der Netzwerkentität.

Gemäß einer Ausführungsform des Verfahrens basiert der kryptographische Algorithmus auf einem Challenge-Response Protokoll unter Nutzung einer Einwegfunktion.

Gemäß einer Ausführungsform des Verfahrens umfasst das mobile Kommunikationsgerät eine Chipkarte, insbesondere eine SIM Karte, eine Multi SIM Karte oder eine UICC, mit einem Mikroprozessor. Gemäß einer Ausführungsform umfasst das Verfahren ein Berechnen der ersten Transaktionsnummer in dem Mikroprozessor.

Gemäß einer Ausführungsform umfasst das Verfahren ein Empfangen der ersten Transaktionsnummer von dem mobilen Kommunikationsgerät durch ein Online-Terminal und eine Übertragung der ersten Transaktionsnummer über ein Internet zu dem Bankserver.

Gemäß einer Ausführungsform umfasst das Verfahren ein Übertragen der ersten Transaktionsnummer zu dem Online-Terminal ohne Interaktion mit dem Hauptprozessor, dem Speicher und dem Betriebssystem des mobilen Kommunikationsgeräts.

Gemäß einer Ausführungsform umfasst das Verfahren ein nicht-speicherresidentes Anzeigen der ersten Transaktionsnummer auf einem Display des mobilen Kommunikationsgeräts unter Umgehung des Hauptprozessors und des Betriebssystems.

Gemäß einer Ausführungsform umfasst das Verfahren ein Übertragen der ersten Transaktionsnummer über eine Nahfeldkommunikationsschnittstelle.

Gemäß einer Ausführungsform umfasst das Verfahren ein Übertragen der ersten Transaktionsnummer über eine Nahfeldkommunikationsschnittstelle unter Umgehung des Hauptprozessors, des Speichers und des Betriebssystems des mobilen Kommunikationsgeräts.

Gemäß einer Ausführungsform umfasst das Verfahren ein Übertragen der ersten Transaktionsnummer über eine Nahfeldkommunikationsschnittstelle zu dem Online-Terminal ohne die erste Transaktionsnummer auf einem Display anzuzeigen.

Gemäß einer Ausführungsform umfasst das Verfahren ein Übertragen der ersten Transaktionsnummer über eine direkte Verdrahtung zwischen der Chipkarte und der Nahfeldkommunikationsschnittstelle.

Gemäß einer Ausführungsform umfasst das Verfahren ein Übertragen der ersten Transaktionsnummer über die Nahfeldkommunikationsschnittstelle unter Nutzung eines der folgenden Protokolle: Single Wire Protocol, SWP, NFC Wired Interface, NFC-WI.

Gemäß einer Ausführungsform des Verfahrens umfasst das mobile Kommunikationsgerät ein Smartphone oder einen Tablet PC mit Mobilfunkmodul. Gemäß einer Ausführungsform des Verfahrens umfasst die Netzwerkentität einen Server eines Mobilfunknetzbetreibers.

Weitere Ausführungsbeispiele werden Bezug nehmend auf die beiliegenden Zeichnungen erläutert. Es zeigen:
- Fig. 1: eine schematische Darstellung eines Transaktionsautorisierungssystems 10 gemäß einer ersten Ausführungsform;
- Fig. 2: eine schematische Darstellung eines Transaktionsautorisierungssystems 20 gemäß einer zweiten Ausführungsform;
- Fig. 3: eine schematische Darstellung eines Transaktionsautorisierungssystems 30 gemäß einer dritten Ausführungsform; und
- Fig. 4: eine schematische Darstellung eines Verfahrens 400 zum Autorisieren Einer Transaktion gemäß einer Ausführungsform.

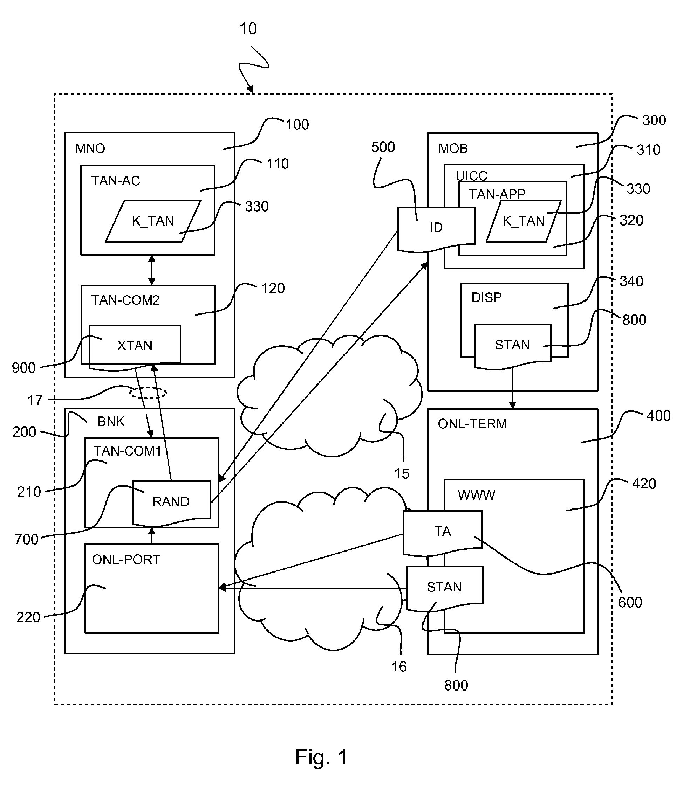

Fig. 1 zeigt eine schematische Darstellung eines Transaktionsautorisierungssystems 10 gemäß einer ersten Ausführungsform.

Das Transaktionsautorisierungssystem 10 enthält ein mobiles Kommunikationsgerät 300, eine Netzwerkentität 100 und einen Bankserver 200. Das mobile Kommunikationsgerät dient dazu, eine erste Transaktionsnummer STAN, 800 unter Verwendung eines kryptographischen Algorithmus basierend auf einer Zufallszahl RAND, 700 und einem geheimen Schlüssel KTAN, 330 zu erzeugen. Die Netzwerkentität 100 dient dazu, eine zweite Transaktionsnummer XTAN, 900 unter Verwendung einer Beziehung zwischen einer Identifikation ID, 500 des mobilen Kommunikationsgeräts 300 und dem geheimen Schlüssel KTAN, 330 und unter Verwendung des kryptographischen Algorithmus basierend auf der Zufallszahl RAND, 700 und dem geheimen Schlüssel KTAN, 330 zu erzeugen. Der Bankserver 200 dient dazu, eine Transaktion 600 basierend auf einer Übereinstimmung der zweiten Transaktionsnummer XTAN, 900 mit der ersten Transaktionsnummer STAN, 800 zu autorisieren.

Die Identifikation ID, 500 des mobilen Kommunikationsgeräts 300 kann eine MSISDN Nummer oder IMSI sein. Der Bankserver 200 kann die Zufallszahl RAND, 700 über ein Mobilfunknetz 15 zu dem mobilen Kommunikationsgerät 300 übertragen. Das mobile Kommunikationsgerät 300 kann die erste Transaktionsnummer STAN, 800 zu dem Bankserver 200 übertragen. Der Bankserver 200 kann die Zufallszahl RAND, 700 und die Identifikation ID, 500 des mobilen Kommunikationsgeräts 300 über ein gesichertes Protokoll 17 zu der Netzwerkentität 100 übertragen. Die Netzwerkentität 100 kann die zweite Transaktionsnummer XTAN, 900 über das gesicherte Protokoll 17 zu dem Bankserver übertragen.

Der Bankserver 200 kann die Zufallszahl RAND, 700 basierend auf Daten der Transaktion 600, insbesondere einem Betrag der Transaktion 600, einer Kontonummer, einer IBAN, einer Bankleitzahl und/oder einer BIC erzeugen, wie weiter unten genauer beschrieben wird. Der Bankserver 200 kann die Zufallszahl RAND, 700 basierend auf einer Geräteidentifikation des mobilen Kommunikationsgeräts 300, insbesondere einer IMEI Nummer erzeugen, wie weiter unten genauer beschrieben wird. Der Bankserver 200 kann die Netzwerkentität 100 basierend auf der Identifikation ID, 500 des mobilen Kommunikationsgeräts 300 identifizieren, wie weiter unten genauer beschrieben wird. Das mobile Kommunikationsgerät 300 kann sich bei dem Bankserver 200 unter Angabe der Identifikation ID, 500 des mobilen Kommunikationsgeräts 300 und einer Identifikation der Netzwerkentität 100 registrieren, wie weiter unten genauer beschrieben wird. Der kryptographische Algorithmus kann auf einem Challenge-Response Protokoll unter Nutzung einer Einwegfunktion basieren. Das mobile Kommunikationsgerät 300 kann eine Chipkarte 310, insbesondere eine SIM Karte oder eine Multi SIM Karte, mit einem Mikroprozessor umfassen, wie weiter unten genauer beschrieben wird. Das mobile Kommunikationsgerät kann die erste Transaktionsnummer STAN, 800 in dem Mikroprozessor berechnen. Das Transaktionsautorisierungssystem 10 kann ein Online-Terminal 400 enthalten, das die erste Transaktionsnummer STAN, 800 von dem mobilen Kommunikationsgerät 300 empfangen kann und über ein Internet 16 zu dem Bankserver 200 übertragen kann, wie weiter unten genauer beschrieben wird. Das mobile Kommunikationsgerät 300 kann die erste Transaktionsnummer STAN, 800 ohne Interaktion mit dem Mikroprozessor zu dem Online-Terminal 400 übertragen, wie weiter unten genauer beschrieben wird. Das mobile Kommunikationsgerät kann ein Display 340 aufweisen. Das mobile Kommunikationsgerät 300 kann die erste Transaktionsnummer STAN, 800 nicht-speicherresident auf dem Display 340 anzeigen, wie weiter unten genauer beschrieben wird. Das mobile Kommunikationsgerät 300 kann ein Smartphone oder ein Tablet PC mit Mobilfunkmodul sein. Die Netzwerkentität 100 kann ein Server eines Mobilfunknetzbetreibers sein.

Im Folgenden wird eine mögliche Arbeitsweise des Transaktionsautorisierungssystems 10 beschrieben.

Bei der Ausgabe einer neuen UICC 310 vom MNO kann eine zusätzliche TAN-Applikation 320 auf die UICC zusammen mit einem geheimen Schlüssel KTAN 330 aufgebracht werden. Der Schlüssel KTAN 330 kann vom MNO zusätzlich zusammen mit der betreffenden IMSI in einem TAN-Authentisierungscenter 110 gespeichert werden. In der TAN-Applikation kann ein kryptographischer Algorithmus implementiert sein, vorzugsweise eine kryptographische Einwegfunktion, die sich für einen Einsatz in einem Challenge-Response-Protokoll eignet. Wenn sich der Mobilfunkkunde als Bankkunde bei einer Bank für das Online-Banking anmeldet, dann kann er sich bei der Bank mit seiner MSISDN registrieren und zusätzlich seinen MNO 100 angeben. Die Bank kann somit bei einer späteren Transaktionsautorisierung Kontakt zum MNO aufnehmen. In einer anderen Ausgestaltung kann die Bank Zugriff auf eine Datenbank haben, in der zu jeder MSISDN der betreffende MNO gespeichert sein kann, so dass die Bank den MNO selbsttätig anhand der MSISDN herausfinden kann. In einer weiteren alternativen Ausgestaltung kann der Mobilfunkkunde bei der Registrierung eine Online-Adresse des MNOs angeben (z.B. URL, URI), so dass die Bank über ein gesichertes Protokoll (z. B. https, d. h. http in Verbindung mit TLS) Informationen mit dem MNO (TAN, Kommunikationsserver 120) austauschen kann. Eine weitere vorzugsweise Ausgestaltung sieht vor, dass der Kunde zusammen mit der MSISDN die IMEI des Endgeräts bei der Bank angeben kann, mit dem er später den Autorisierungsvorgang durchführen möchte. Die Verknüpfung des Autorisierungsvorgangs mit einem bestimmten Endgerät (identifiziert über die IMEI) hat den Vorteil, solche Betrugsszenarien auszuschließen, bei denen sich der Betrüger gegenüber einem MNO als Mobilfunkkunde ausgibt und eine Zweit- oder Ersatz-UICC (bzw. Zweit- oder Ersatz-SIM-Karte, z. B. Multi SIM bei der Telekom) zu einem bestehenden Mobilfunkvertrag, den Online-Banking aktiviert wurde, bestellt. Die IMEI kann dann während der Transaktionsautorisierung überprüft werden, um sicherzustellen, dass diese mit dem legitimierten Endgerät durchgeführt wird.

Bei einer anderen vorzugsweisen Ausgestaltung kann vorgesehen sein, dass die TAN Applikation 320 auf der UICC 310 dem Kunden eine Komfortfunktion bieten kann, den Registrierungsvorgang für das Online-Banking gegenüber einer Bank zu unterstützen: Dabei kann der Kunde über die Bedienungselemente des Endgeräts die Registrierungsfunktion aktivieren und kann entweder den Namen, die BLZ oder BIC der betreffenden Bank angeben oder einen SMS-Shortcode eingeben. Die TAN-Applikation auf der UICC kann daraufhin automatisch die folgenden Daten ermitteln: 1. MSISDN des Mobilfunkanschlusses, 2. IMEI des Endgeräts, 3. IMSI des Mobilfunkanschlusses, wobei aus der IMSI nur der MCC und der MNC verwendet werden und die übrigen Ziffern unberücksichtigt bleiben können. Diese Daten 500 können von der TAN-Applikation mit Hilfe einer SMS oder Binär-SMS an die Bank gesendet werden, beispielsweise adressiert durch den SMS-Shortcode. Falls Bankname, BLZ oder BIC verwendet wurden, kann ein Shortcode oder eine Zielrufnummer für die SMS durch eine weitere Kommunikation zunächst ermittelt werden. Die Bank kann so auf diesem Weg automatisch alle benötigten Daten erhalten und kann den MNO anhand des MCC und MNC identifizieren. Möchte nun der Bankkunde eine Transaktion 600 autorisieren, dann kann das TAN Kommunikationsmodul 210 der Bank 200 eine Zufallszahl RAND 700 per SMS über ein Mobilfunknetz 500 an das Smartphone 300 des Bank- bzw. Mobilfunkkunden senden, das über die hinterlegte MSISDN adressiert werden kann. Im Smartphone kann die per SMS empfangene Zufallszahl RAND an die TAN-Applikation 320 übergeben werden, die mit Hilfe von RAND und des geheimen Schlüssels KTAN sowie vorzugsweise einer kryptographischen Einwegfunktion eine signierte Transaktionsnummer STAN 800 berechnen kann.

In einer Ausgestaltung kann die Transaktionsnummer STAN auf dem Display des Endgeräts 340 angezeigt werden. Vorzugsweise kann die Anzeige der STAN mit Hilfe eines speziellen Display-Befehls aus der TAN-Applikation heraus erfolgen, so dass die STAN vorzugsweise nicht speicherresident im Mobilfunkendgerät wird. Die Angriffsmöglichkeiten für Schadsoftware auf dem Endgerät können dadurch erheblich eingeschränkt werden. Der Mobilfunkkunde kann dann die STAN vom Display ablesen und sie in seinen Web-Browser 420 eingeben, wie dies auch beim heutigen mTAN Verfahren üblich ist.

Nachdem die STAN durch eine Benutzereingabe nach Anzeige auf dem Display im Web-Browser vorliegt, kann sie anschließend über das Internet an das Online-Banking-Portal der Bank übertragen werden. Das TAN-Kommunikationsmodul der Bank kann in der Zwischenzeit die Zufallszahl RAND zusammen mit der MSISDN des Bankkunden über ein sicheres Protokoll (vorzugsweise https) an einen TAN Kommunikationsserver 120 beim MNO übertragen. Dieser Kommunikationsserver kann zur erhaltenen MSISDN die zugehörige IMSI ermitteln und die empfangene RAND zusammen mit der IMSI an das TAN-Authentisierungscenter 110 übertragen. Das TAN-Authentisierungscenter kann zur IMSI den gespeicherten Schlüssel KTAN ermitteln und mit Hilfe des kryptographischen Algorithmus, der auch in der TAN-Applikation implementiert ist, aus KTAN und RAND eine erwartete Transaktionsnummer XTAN 900 berechnen, die zurück an den TAN-Kommunikationsserver übergeben werden kann. Der TAN-Kommunikationsserver kann die XTAN über das sichere Protokoll an das TAN Kommunikationsmodul der Bank übertragen. Dort können die über das Internet vom Bankkunden empfangene STAN und die vom MNO empfangene XTAN verglichen werden. Stimmen die beiden Werte überein, kann die Transaktion als erfolgreich autorisiert gelten.

Die Zufallszahl RAND kann aufgrund der Verwendung eines kryptographischen Challenge-Response-Protokolls über einen unsicheren Kanal übertragen werden. Bis zur Berechnung von STAN ist es also nicht erforderlich, die Sicherheit des erfindungsmäßigen Systems 10 zu betrachten. In einer vorzugsweisen Ausgestaltung kann die Ausführung der betrügerischen Transaktion verhindert werden, indem die Bank die Zufallszahl RAND nicht rein zufällig wählt, sondern in die Berechnung von RAND die Transaktionsdaten wie bspw. Kontonummer oder IBAN des Empfängers, BLZ oder BIC des Empfängers und den Betrag der Transaktion eingehen lässt. Somit wären RAND und implizit STAN von diesen Transaktionsdaten abhängig und eine von einem Betrüger abgefangene STAN kann nicht für betrügerische Überweisungen verwendet werden. Sofern eine Ausgestaltung zum Einsatz kommt, bei der zusätzlich zur MSISDN die IMEI eines bestimmten Endgeräts bei der Bank registriert wird, enthält die Nachricht mit RAND zusätzlich diese IMEI. Die TAN-Applikation kann dann so programmiert werden, dass sie die empfangene IMEI mit der tatsächlichen IMEI des verwendeten Endgeräts vergleicht. Stimmen beide Seriennummern überein, kann die STAN berechnet werden, ansonsten kann die Berechnung nicht ausgeführt werden. Verzugsweise kann die Zufallszahl RAND oder ein Wert, der neben einer Zufallszahl die (evtl. verschlüsselten oder gehashten) Transaktionsdaten wie Kontonummer, BLZ, IBAN, BIC und Betrag sowie optional die IMEI enthält, nicht als SMS sondern als Binär-SMS zur TAN-Applikation übertragen werden.

Im Wesentlichen kann die Sicherheit bis zu diesem Schritt von der Güte des verwendeten kryptographischen Verfahrens in der TAN-Applikation und der Sicherheit der UICC als Sicherheitsmodul abhängen. In der Literatur sind eine Vielzahl von als sicher anerkannte kryptographische Funktionen bekannt, die für die Berechnung im Rahmen des Challenge-Response-Protokolls eingesetzt werden können. Die UICC kann ebenfalls als sicher betrachtet werden, da davon auch die Sicherheit der Mobilfunkkommunikation abhängt. Wenn die STAN auf dem Display des Endgeräts angezeigt werden soll, dann kann ein spezieller Display-Befehl aus der SIM-Toolkit-Applikation (TAN-Applikation) heraus verwendet werden, der die STAN direkt, unter Umgehung der übrigen Betriebssystemfunktionen des Endgeräts und insbesondere des Speichers, zur Anzeige bringen kann. Vorzugsweise kann dann zusammen mit der STAN die Kontonummer und BLZ bzw. IBAN und BIC des Empfängers sowie der Betrag der Transaktion angezeigt werden, sofern diese Daten zusammen mit der RAND übertragen wurden.

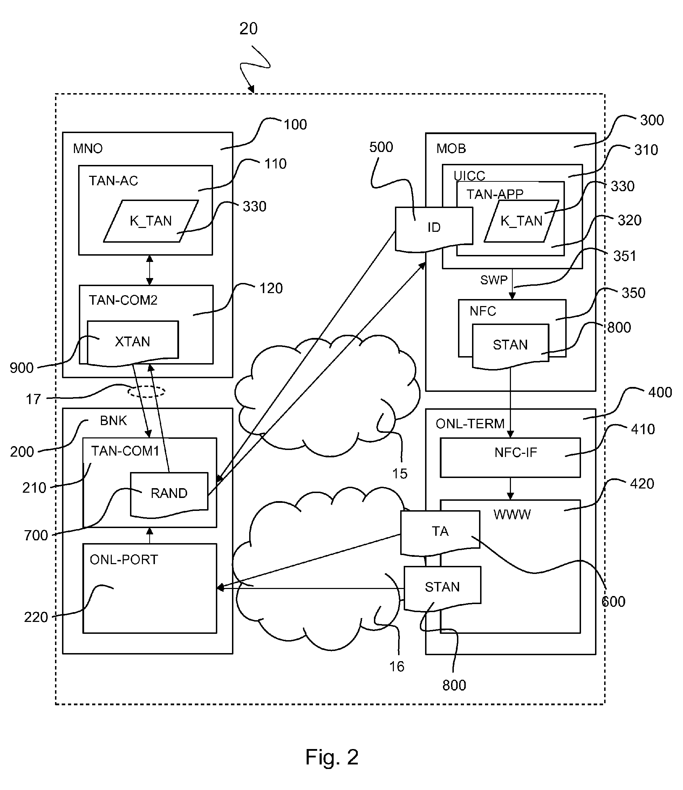

Fig. 2 zeigt eine schematische Darstellung eines Transaktionsautorisierungssystems 20 gemäß einer zweiten Ausführungsform.

Das Transaktionsautorisierungssystem 20 kann dem in Fig. 1 beschriebenen Transaktionsautorisierungssystems 10 entsprechen, wobei statt der anwenderbasierten Übertragung der ersten Transaktionsnummer über das Display des Endgeräts 340 eine Übertragung mittels NFC-Schnittstelle verwendet werden kann.

Dafür kann das Transaktionsautorisierungssystem 20 eine Nahfeldkommunikationsschnittstelle 350 zwischen dem mobilen Kommunikationsgerät 300 und dem Online Terminal 400 aufweisen, wie weiter unten genauer beschrieben wird. Das mobile Kommunikationsgerät 300 kann die erste Transaktionsnummer STAN, 800 über die Nahfeldkommunikationsschnittstelle 350 zu dem Online-Terminal 400 übertragen ohne die erste Transaktionsnummer STAN, 800 auf einem Display anzuzeigen. Das Transaktionsautorisierungssystem 20 kann eine direkte Verdrahtung 351 zwischen der Chipkarte 310 und der Nahfeldkommunikationsschnittstelle 350 aufweisen, wie weiter unten genauer beschrieben wird. Die Chipkarte 310 kann die erste Transaktionsnummer STAN, 800 über die direkte Verdrahtung 351 an die Nahfeldkommunikationsschnittstelle 350 übertragen, insbesondere unter Nutzung eines der folgenden Protokolle: Single Wire Protocol, SWP, NFC Wired Interface, NFC-WI.

Im Folgenden wird eine mögliche Arbeitsweise des Transaktionsautorisierungssystems 20 beschrieben. Diese Arbeitsweise kann der zu Fig. 1 beschriebenen Arbeitsweise entsprechen unter Beachtung der im Folgenden beschriebenen Besonderheiten bei einer Realisierung mit NFC Schnittstelle.

In der in Fig. 2 illustrierten Ausgestaltung des Transaktionsautorisierungssystems 20 ist es nicht notwendig, die STAN zur Anzeige zu bringen. Vielmehr kann die STAN über ein NFC-Funkmodul 350 eines NFC-fähigen Smartphones drahtlos an eine am PC 400 des Bankkunden angeschlossene NFC-Schnittstelle 410 übertragen werden. Bei dieser Übertragungsart kann das so genannte Single Wire Protocol (SWP) bzw. NFC Wired Interface (NFC-WI) zum Einsatz kommen, bei dem die UICC über eine direkte Verdrahtung mit dem NFC Modul im Smartphone kommunizieren kann. Diese Kommunikation ist somit vor einem Angriff durch Schadsoftware auf dem Smartphone geschützt. Die NFC-Schnittstelle am PC kann die empfangene STAN an den Web-Browser übergeben.

Nachdem die STAN durch die NFC-Übertragung im Web-Browser vorliegt, kann sie anschließend über das Internet an das Online-Banking-Portal der Bank übertragen werden.

Bei der NFC-Übertragung ist die Single-Wire-Protocol-Schnittstelle zwischen UICC und NFC-Modul im Smartphone, wie bereits erwähnt, sicher vor Angriffen durch Schadsoftware, da die Verbindung in Hardware durch eine direkte Verdrahtung der UICC mit dem NFC-Modul hergestellt werden kann. Prinzipiell kann die drahtlose NFC-Schnittstelle zwischen dem Smartphone und dem NFC-Leser am PC angegriffen werden. Außerdem könnte eine Schadsoftware auf dem PC die Übertragung der STAN zwischen dem NFC-Leser am PC und dem Web-Browser angreifen. An diesen beiden Stellen (drahtlose NFC-Schnittstelle und Schnittstelle zwischen NFC-Leser und Web-Browser) könnte also die STAN von einem Angreifer mitgelesen werden. Allerdings müsste ein potentielle Betrüger, der diese Schwachstellen ausnutzen möchte, den Bankkunden dazu bringen, im richtigen Moment, nämlich genau dann, wenn der Betrüger eine betrügerische Transaktion ausführen möchte, das Smartphone auf den NFC-Leser zu legen. Der Kunde könnte entsprechend sensibilisiert werden, das Smartphone nur dann auf den NFC-Leser zu legen, wenn er eine Transaktion autorisieren möchte. Da die NFC-Kommunikation naturgemäß nur eine sehr begrenzte Reichweite von wenigen Zentimetern haben kann, kann auch eine versehentliche Kommunikation ausgeschlossen werden.

Das Abfangen der STAN zwischen dem NFC-Leser und dem Web-Browser durch Schadsoftware kann zwar nicht vollständig verhindert werden. Wenn es jedoch vorkäme und der Betrüger würde die STAN für eine betrügerische Transaktion missbrauchen, dann wäre die STAN ungültig, wenn der Kunde seine Transaktion autorisieren möchte. Jener würde dann vom Online-Banking-Portal eine entsprechende Rückmeldung erhalten, dass die Transaktion nicht erfolgreich autorisiert wurde und würde misstrauisch werden. Die betrügerische Transaktion würde zwar nicht verhindert, wohl aber sehr zeitnah erkannt werden. Um zu verhindern, dass ein Betrüger mit Laptop oder Smartphone und NFC-Leser sowie entsprechender Antenne (zur Erhöhung der Reichweite) an öffentlichen Orten versucht, die Endgeräte von Passanten mit einer Implementierung dieses Transaktionsautorisierungssystems 20 dazu zu bringen, eine Transaktionsautorisierung auszuführen, kann in einer Ausführungsform die Durchführung einer STAN-Berechnung und deren Übertragung per NFC vorzugsweise nur mit einer entsprechenden Benutzerinteraktion möglich sein. Diese Benutzerinteraktion kann vorzugsweise ebenfalls in der SIM-Toolkit-Applikation (TAN Applikation) mit speziellen Display-Befehlen implementiert sein, um eine mögliche Manipulation durch Schadsoftware zu verhindern.

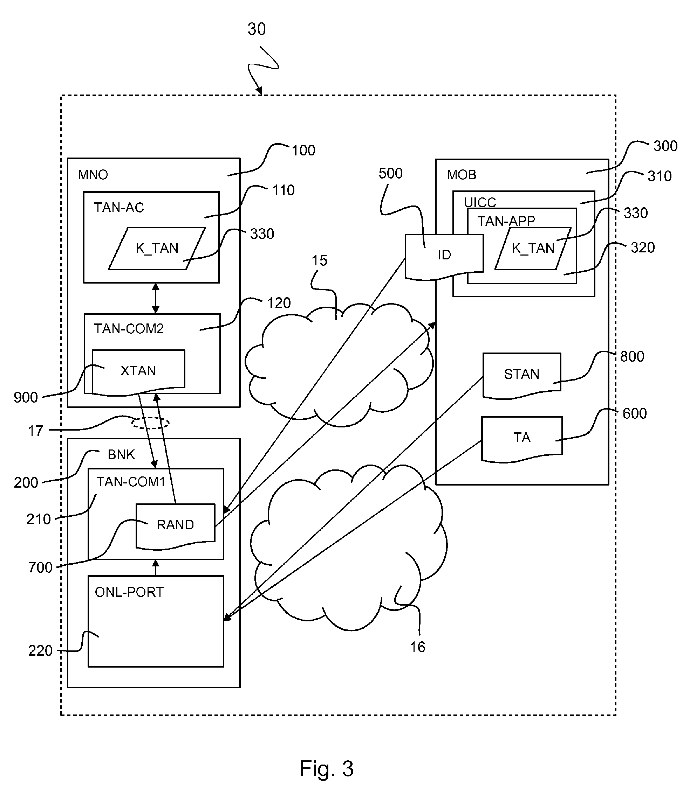

Fig. 3 zeigt eine schematische Darstellung eines Transaktionsautorisierungssystems 30 gemäß einer dritten Ausführungsform.

Das Transaktionsautorisierungssystem 30 kann dem in Fig. 1 beschriebenen Transaktionsautorisierungssystems 10 entsprechen, wobei in der hier beschriebenen dritten Ausführungsform das Online-Terminal 400 entfallen kann. Die Übertragung der ersten Transaktionsnummer kann dabei direkt von dem mobilen Kommunikationsgerät 300 zu dem Bankserver 200 erfolgen. Die erste Transaktionsnummer STAN kann über das Internet 16, wie in Fig. 3 dargestellt, aber auch alternativ oder zusätzlich über das Mobilfunknetz 15 erfolgen.

Im Folgenden wird eine mögliche Arbeitsweise des Transaktionsautorisierungssystems 30 beschrieben. Diese Arbeitsweise kann der zu Fig. 1 beschriebenen Arbeitsweise entsprechen unter Beachtung der im Folgenden beschriebenen Besonderheiten bei einer Realisierung ohne das Online-Terminal 400.

In der Ausgestaltung der Fig. 3 kann das Online-Banking-Terminal bzw. der PC des Kunden entfallen und das Online-Banking kann allein mit Hilfe eines Smartphones 300 durchgeführt werden. Die Transaktion 600 kann mit Hilfe einer App auf dem Smartphone erzeugt werden und an die Bank gesendet werden. Die STAN 800 kann ebenfalls automatisch durch die App an die Bank gesendet werden. Diese Art der Anwendung von Online-Banking wird heutzutage zwar von den Banken untersagt, weil die Gefahr eines betrügerischen Angriffs auf das Smartphone zu groß ist und die Sicherheit durch die Verwendung von zwei Geräten (PC und Smartphone) steigt. Bei einer genaueren Betrachtung der Sicherheit bei Verwendung einer Ausgestaltung des Transaktionsautorisierungssystems 30, bei der die RAND von den Transaktionsdaten abhängt, kann das Verfahren eine ausreichende Sicherheit bieten, um allein auf einem Smartphone (oder Tablet mit Mobilfunkmodul) ausgeführt zu werden.

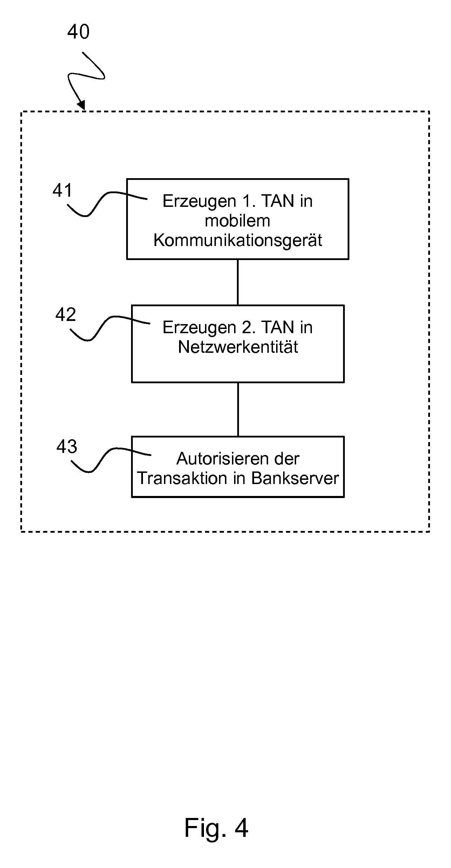

Fig. 4 zeigt eine schematische Darstellung eines Verfahrens 40 zum Autorisieren einer Transaktion gemäß einer Ausführungsform. Das Verfahren 40 umfasst die folgenden Schritten: Erzeugen 41 einer ersten Transaktionsnummer STAN in einem mobilen Kommunikationsgerät unter Verwendung eines kryptographischen Algorithmus basierend auf einer Zufallszahl RAND und einem geheimen Schlüssel KTAN; Erzeugen 42 einer zweiten Transaktionsnummer XTAN in einer Netzwerkentität unter Verwendung einer Beziehung zwischen einer Identifikation des mobilen Kommunikationsgeräts und dem geheimen Schlüssel KTAN und unter Verwendung des kryptographischen Algorithmus basierend auf der Zufallszahl RAND und dem geheimen Schlüssel KTAN; und Autorisieren 43 der Transaktion in einem Bankserver basierend auf einer Übereinstimmung der ersten Transaktionsnummer XTAN mit der zweiten Transaktionsnummer STAN.

Das Verfahren 40 kann ferner die folgenden Schritte umfassen: Übertragen der Zufallszahl RAND über ein Mobilfunknetz von dem Bankserver zu dem mobilen Kommunikationsgerät; Übertragen der ersten Transaktionsnummer STAN von dem mobilen Kommunikationsgerät zu dem Bankserver; Übertragen der Zufallszahl RAND und der Identifikation des mobilen Kommunikationsgeräts von dem Bankserver zu der Netzwerkentität; und Übertragen der zweiten Transaktionsnummer XTAN von der Netzwerkentität zu dem Bankserver.

Die Identifikation des mobilen Kommunikationsgeräts kann eine MSISDN Nummer oder IMSI sein.

Das Verfahren 40 kann ferner den folgenden Schritt umfassen: Erzeugen der Zufallszahl basierend auf Daten der Transaktion, insbesondere einem Betrag der Transaktion, einer Kontonummer, einer IBAN, einer Bankleitzahl und/oder einer BIC.

Das Verfahren 40 kann ferner den folgenden Schritt umfassen: Erzeugen der Zufallszahl basierend auf einer Geräteidentifikation des mobilen Kommunikationsgeräts, insbesondere einer IMEI Nummer.

Das Verfahren 40 kann ferner den folgenden Schritt umfassen: Erzeugen der ersten Zufallszahl basierend auf Daten der Transaktion, insbesondere einem Betrag der Transaktion, einer Kontonummer, einer IBAN, einer Bankleitzahl und/oder einer BIC. Hinzufügen der Geräteidentifikation des mobilen Kommunikationsgeräts, insbesondere der IMEI Nummer, zu dieser ersten Zufallszahl und Erzeugen der zweiten Zufallszahl.

Das Verfahren 40 kann ferner den folgenden Schritt umfassen: Identifizieren der Netzwerkentität basierend auf der Identifikation des mobilen Kommunikationsgeräts.

Das Verfahren 40 kann ferner den folgenden Schritt umfassen: Registrieren des mobilen Kommunikationsgeräts bei dem Bankserver unter Angabe der Identifikation des mobilen Kommunikationsgeräts und/oder einer Identifikation der Netzwerkentität.

Der kryptographische Algorithmus kann auf einem Challenge-Response Protokoll unter Nutzung einer Einwegfunktion basieren.

Das mobile Kommunikationsgerät kann über eine Chipkarte verfügen, insbesondere eine SIM Karte, eine Multi SIM Karte oder UICC, mit einem Mikroprozessor. Das Verfahren 40 kann ferner den folgenden Schritt umfassen: Berechnen der ersten Transaktionsnummer in dem Mikroprozessor der Chipkarte.

Das Verfahren 40 kann ferner den folgenden Schritt umfassen: Empfangen der ersten Transaktionsnummer von dem mobilen Kommunikationsgerät durch ein Online-Terminal und Übertragung der ersten Transaktionsnummer über ein Internet zu dem Bankserver.

Das Verfahren 40 kann ferner den folgenden Schritt umfassen: Übertragen der ersten Transaktionsnummer zu dem Online-Terminal ohne Interaktion mit dem Hauptprozessor, Speicher und Betriebssystem des mobilen Kommunikationsgeräts.

Das Verfahren 40 kann ferner den folgenden Schritt umfassen: nicht-speicherresidentes Anzeigen der ersten Transaktionsnummer nicht-speicherresident auf einem Display des mobilen Kommunikationsgeräts unter Umgehung des Hauptprozessors und Betriebssystems.

Das Verfahren 40 kann ferner den folgenden Schritt umfassen: Übertragen der ersten Transaktionsnummer über eine Nahfeldkommunikationsschnittstelle.

Das Verfahren 40 kann ferner den folgenden Schritt umfassen: Übertragen der ersten Transaktionsnummer über eine Nahfeldkommunikationsschnittstelle unter Umgehung des Hauptprozessors, des Speichers und des Betriebssystems des mobilen Kommunikationsgeräts.

Das Verfahren 40 kann ferner den folgenden Schritt umfassen: Übertragen der ersten Transaktionsnummer über eine Nahfeldkommunikationsschnittstelle zu dem Online-Terminal ohne die erste Transaktionsnummer auf einem Display anzuzeigen.

Das Verfahren 40 kann ferner den folgenden Schritt umfassen: Übertragen der ersten Transaktionsnummer über eine direkte Verdrahtung zwischen der Chipkarte und der Nahfeldkommunikationsschnittstelle.

Das Verfahren 40 kann ferner den folgenden Schritt umfassen: Übertragen der ersten Transaktionsnummer über die Nahfeldkommunikationsschnittstelle unter Nutzung eines der folgenden Protokolle: Single Wire Protocol, SWP, NFC Wired Interface, NFC-WI.

Das mobile Kommunikationsgerät kann ein Smartphone oder ein Tablet PC mit Mobilfunkmodul sein. Die Netzwerkentität kann ein Server eines Mobilfunknetzbetreibers sein.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 4 beschriebene Verfahren 40 ausgeführt werden kann, wenn das Produkt auf einem Computer läuft. Das Computerprogrammprodukt kann auf einem computergeeigneten Medium gespeichert sein und folgendes umfassen: computerlesbare Programmittel, die einen Computer veranlassen, eine erste Transaktionsnummer in einem mobilen Kommunikationsgerät unter Verwendung eines kryptographischen Algorithmus basierend auf einer Zufallszahl und einem geheimen Schlüssel zu erzeugen; eine zweite Transaktionsnummer in einer Netzwerkentität unter Verwendung einer Beziehung zwischen einer Identifikation des mobilen Kommunikationsgeräts und dem geheimen Schlüssel und unter Verwendung des kryptographischen Algorithmus basierend auf der Zufallszahl und dem geheimen Schlüssel zu erzeugen; und die Transaktion in einem Bankserver basierend auf einer Übereinstimmung der ersten Transaktionsnummer mit der zweiten Transaktionsnummer zu autorisieren. Je nachdem, auf welchem Computer das Computerprogrammprodukt läuft, beispielsweise mobiles Kommunikationsgerät, Bankserver oder Netzwerkentität kann, können die Programmmittel die entsprechenden Schritte, die für den Ablauf des Verfahrens geeignet sind, ausführen. Beispielsweise kann das Computerprogrammprodukt das mobile Kommunikationsgerät dazu veranlassen, eine erste Transaktionsnummer unter Verwendung eines kryptographischen Algorithmus basierend auf einer Zufallszahl und einem geheimen Schlüssel zu erzeugen. Beispielsweise kann das Computerprogrammprodukt die Netzwerkentität dazu veranlassen, eine zweite Transaktionsnummer unter Verwendung einer Beziehung zwischen einer Identifikation des mobilen Kommunikationsgeräts und dem geheimen Schlüssel und unter Verwendung des kryptographischen Algorithmus basierend auf der Zufallszahl und dem geheimen Schlüssel zu erzeugen. Beispielsweise kann das Computerprogrammprodukt den Bankserver dazu veranlassen, die Transaktion basierend auf einer Übereinstimmung der ersten Transaktionsnummer mit der zweiten Transaktionsnummer zu autorisieren. Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk angeordnet sein.

Gemäß einigen Ausführungsformen wird das mTAN-Verfahren sicherer gemacht, wodurch die vorstehend beispielhaft beschriebenen Angriffe verhindert oder erschwert werden können.

Gemäß einigen Ausführungsformen kann die Transaktionssicherheit unter der Prämisse eines unsicheren Übertragungskanals "Mobilfunknetz" und eines unsicheren mobilen Teilnehmerkommunikationsgeräts "Smartphone" erhöht werden. Gemäß einigen Ausführungsformen wird kann daher davon ausgegangen werden, dass es aufgrund der Sicherheitsarchitektur der existierenden Smartphone-Betriebssysteme nicht möglich sein wird, die Installation von Schadsoftware auf Smartphones oder eine Manipulation der SMS-Funktion von Smartphones grundsätzlich zu unterbinden. Das Smartphone sowie der Übertragungskanal "Mobilfunknetz" wird daher grundsätzlich als unsicher bzw. angreifbar angesehen. Es ist somit insbesondere die Aufgabe zu lösen, über einen unsicheren Kanal eine Nachricht zu übertragen, die anschließend mit Hilfe eines in den Mobilfunkendgeräten vorhandenen Sicherheitsmoduls (UICC) verarbeitet wird, so dass sich aus dieser Berechnung eine Transaktionsnummer ergibt, die nur der Bank bekannt ist.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 10:: Transaktionsautorisierungssystem
- 20:: Transaktionsautorisierungssystem
- 30:: Transaktionsautorisierungssystem
- 100:: Netzwerkentität, MNO, Einrichtung eines Mobilfunknetzbetreibers
- 200:: Bankserver
- 300:: mobiles Kommunikationsgerät, Smartphone, Tablet mit Mobilfunkmodul
- 400:: Online Terminal, PC mit Online Anschluss
- 110:: TAN-Authentifizierungscenter, TAN-AC
- 330:: geheimer Schlüssel, K_TAN bzw. KTAN
- 120:: TAN-Kommunikationsserver, TAN-COM2
- 900:: zweite Transaktionsnummer, XTAN
- 210:: TAN-Kommunikationsmodul, TAN-COM1
- 700:: Zufallszahl, RAND
- 220:: Online-Banking-Portal, ONL-PORT
- 310:: Chipkarte, SIM-Karte oder Multi SIM-Karte, UICC
- 320:: TAN-Applikation, TAN-Softwareanwendung, TAN-APP
- 340:: Display, Anzeige, DISP
- 500:: Identifikation des mobilen Kommunikationsgeräts, ID, z.B. MSISDN, IMEI
- 600:: Transaktion, TA
- 800:: erste Transaktionsnummer, STAN
- 420:: Web-Browser, WWW
- 15:: Mobilfunknetz
- 16:: Internet
- 17:: gesichertes Protokoll
- 350:: NFC: Nahfeldkommunikationsschnittstelle, Modul im mobilen Kommunikationsgerät
- 410:: NFC-Schnittstelle, Modul im Online-Terminal
- 351:: feste Verdrahtung zwischen Chipkarte und NFC Schnittstelle
- 40:: Verfahren zum Autorisieren einer Transaktion
- 41:: Erzeugen erster TAN in mobilem Kommunikationsgerät
- 42:: Erzeugen zweiter TAN in Netzwerkentität
- 43:: Autorisieren der Transaktion in Bankserver

## Patentansprüche

1. Transaktionsautorisierungssystem (10, 20, 30), umfassend:
ein mobiles Kommunikationsgerät (300), das ausgelegt ist, eine erste Transaktionsnummer (STAN, 800) unter Verwendung eines kryptographischen Algorithmus basierend auf einer Zufallszahl (RAND, 700) und einem geheimen Schlüssel (KTAN, 330) zu erzeugen;
eine Netzwerkentität (100), die ausgelegt ist, eine zweite Transaktionsnummer (XTAN, 900) unter Verwendung einer Beziehung zwischen einer Identifikation (ID, 500) des mobilen Kommunikationsgeräts (300) und dem geheimen Schlüssel (KTAN, 330) und unter Verwendung des kryptographischen Algorithmus basierend auf der Zufallszahl (RAND, 700) und dem geheimen Schlüssel (KTAN, 330) zu erzeugen; und
einen Bankserver (200), der ausgelegt ist, eine Transaktion (600) basierend auf einer Übereinstimmung der zweiten Transaktionsnummer (XTAN, 900) mit der ersten Transaktionsnummer (STAN, 800) zu autorisieren.

2. Transaktionsautorisierungssystem (10, 20, 30) nach Anspruch 1,
wobei die Identifikation (ID, 500) des mobilen Kommunikationsgeräts (300) eine MSISDN Nummer oder IMSI umfasst.

3. Transaktionsautorisierungssystem (10, 20, 30) nach Anspruch 1 oder 2,
wobei der Bankserver (200) ausgelegt ist, die Zufallszahl (RAND, 700) über ein Mobilfunknetz (15) zu dem mobilen Kommunikationsgerät (300) zu übertragen;
wobei das mobile Kommunikationsgerät (300) ausgelegt ist, die erste Transaktionsnummer (STAN, 800) zu dem Bankserver (200) zu übertragen;
wobei der Bankserver (200) ausgelegt ist, die Zufallszahl (RAND, 700) und die Identifikation (ID, 500) des mobilen Kommunikationsgeräts (300) über ein gesichertes Protokoll (17) zu der Netzwerkentität (100) zu übertragen; und
wobei die Netzwerkentität (100) ausgelegt ist, die zweite Transaktionsnummer (XTAN, 900) über das gesicherte Protokoll (17) zu dem Bankserver (200) zu übertragen.

4. Transaktionsautorisierungssystem (10, 20, 30) nach einem der vorherigen Ansprüche,
wobei der Bankserver (200) ausgelegt ist, die Zufallszahl (RAND, 700) basierend auf Daten der Transaktion (600), insbesondere einem Betrag der Transaktion (600), einer Kontonummer, einer IBAN, einer Bankleitzahl, einer IMSI und/oder einer BIC zu erzeugen.

5. Transaktionsautorisierungssystem (10, 20, 30) nach einem der vorherigen Ansprüche,
wobei der Bankserver (200) ausgelegt ist, die Zufallszahl (RAND, 700) basierend auf einer Geräteidentifikation des mobilen Kommunikationsgeräts (300), insbesondere einer IMEI Nummer zu erzeugen.

6. Transaktionsautorisierungssystem (10, 20, 30) nach einem der vorherigen Ansprüche,
wobei der Bankserver (200) ausgelegt ist, die Netzwerkentität (100) basierend auf der Identifikation (ID, 500) des mobilen Kommunikationsgeräts (300) zu identifizieren.

7. Transaktionsautorisierungssystem (10, 20, 30) nach einem der vorherigen Ansprüche,
wobei das mobile Kommunikationsgerät (300) ausgelegt ist, sich bei dem Bankserver (200) unter Angabe der Identifikation (ID, 500) des mobilen Kommunikationsgeräts (300) und einer Identifikation der Netzwerkentität (100) zu registrieren.

8. Transaktionsautorisierungssystem (10, 20, 30) nach einem der vorherigen Ansprüche,
wobei der kryptographische Algorithmus auf einem Challenge-Response Protokoll unter Nutzung einer Einwegfunktion basiert.

9. Transaktionsautorisierungssystem (10, 20, 30) nach einem der vorherigen Ansprüche,
wobei das mobile Kommunikationsgerät (300) eine Chipkarte (310), insbesondere eine SIM Karte, eine Multi SIM Karte oder UICC, mit einem Mikroprozessor umfasst; und
wobei das mobile Kommunikationsgerät (300) ausgelegt ist, die erste Transaktionsnummer (STAN, 800) in dem Mikroprozessor der Chipkarte zu berechnen.

10. Transaktionsautorisierungssystem (10, 20) nach Anspruch 9, umfassend:
ein Online-Terminal (400), das ausgelegt ist, die erste Transaktionsnummer (STAN, 800) von dem mobilen Kommunikationsgerät (300) zu empfangen und über ein Internet (16) zu dem Bankserver (200) zu übertragen.

11. Transaktionsautorisierungssystem (10, 20) nach Anspruch 10,
wobei das mobile Kommunikationsgerät (300) ausgelegt ist, die erste Transaktionsnummer (STAN, 800) ohne Interaktion mit einem Hauptprozessor, Speicher und Betriebssystem des mobilen Kommunikationsgeräts (300) zu dem Online-Terminal (400) zu übertragen.

12. Transaktionsautorisierungssystem (10) nach Anspruch 9 oder 10,
wobei das mobile Kommunikationsgerät (300) ein Display (340) umfasst; und
wobei das mobile Kommunikationsgerät (300) ausgelegt ist, die erste Transaktionsnummer (STAN, 800) nicht-speicherresident unter Umgehung eines Hauptprozessors und Betriebssystems des mobilen Kommunikationsgeräts (300) auf dem Display (340) anzuzeigen.

13. Transaktionsautorisierungssystem (20) nach einem der Ansprüche 9 bis 11, umfassend:
eine Nahfeldkommunikationsschnittstelle (350) zwischen dem mobilen Kommunikationsgerät (300) und dem Online Terminal (400),
wobei das mobile Kommunikationsgerät (300) ausgelegt ist, die erste Transaktionsnummer (STAN, 800) über die Nahfeldkommunikationsschnittstelle (350) zu dem Online-Terminal (400) zu übertragen ohne die erste Transaktionsnummer (STAN, 800) auf einem Display anzuzeigen.

14. Transaktionsautorisierungssystem (20) nach Anspruch 13, umfassend:
eine direkte Verdrahtung (351) zwischen der Chipkarte (310) und der Nahfeldkommunikationsschnittstelle (350); und
wobei die Chipkarte (310) ausgelegt ist, die erste Transaktionsnummer (STAN, 800) über die direkte Verdrahtung (351) an die Nahfeldkommunikationsschnittstelle (350) zu übertragen, insbesondere unter Nutzung eines der folgenden Protokolle:
Single Wire Protocol, SWP,
NFC Wired Interface, NFC-WI.

15. Transaktionsautorisierungssystem (10, 20, 30) nach einem der vorherigen Ansprüche,
wobei das mobile Kommunikationsgerät (300) ein Smartphone oder einen Tablet PC mit Mobilfunkmodul umfasst; und
wobei die Netzwerkentität (100) einen Server eines Mobilfunknetzbetreibers umfasst.

16. Verfahren (40) zum Autorisieren einer Transaktion, mit folgenden Schritten:
Erzeugen (41) einer ersten Transaktionsnummer (STAN) in einem mobilen Kommunikationsgerät unter Verwendung eines kryptographischen Algorithmus basierend auf einer Zufallszahl (RAND) und einem geheimen Schlüssel (KTAN);
Erzeugen (42) einer zweiten Transaktionsnummer (XTAN) in einer Netzwerkentität unter Verwendung einer Beziehung zwischen einer Identifikation des mobilen Kommunikationsgeräts und dem geheimen Schlüssel (KTAN) und unter Verwendung des kryptographischen Algorithmus basierend auf der Zufallszahl (RAND) und dem geheimen Schlüssel (KTAN); und
Autorisieren (43) der Transaktion in einem Bankserver basierend auf einer Übereinstimmung der ersten Transaktionsnummer (XTAN) mit der zweiten Transaktionsnummer (STAN).

17. Verfahren (40) nach Anspruch 16, ferner mit den Schritten:
Übertragen der Zufallszahl (RAND) über ein Mobilfunknetz von dem Bankserver zu dem mobilen Kommunikationsgerät;
Übertragen der ersten Transaktionsnummer (STAN) von dem mobilen Kommunikationsgerät zu dem Bankserver;
Übertragen der Zufallszahl (RAND) und der Identifikation des mobilen Kommunikationsgeräts von dem Bankserver zu der Netzwerkentität; und
Übertragen der zweiten Transaktionsnummer (XTAN) von der Netzwerkentität zu dem Bankserver.

18. Verfahren (40) nach Anspruch 16, ferner mit den Schritten:
Übertragen der Zufallszahl (RAND) über ein Mobilfunknetz von dem Bankserver zu dem mobilen Kommunikationsgerät;
Anzeigen der ersten Transaktionsnummer (STAN) durch einen Mikroprozessor einer integrierten Chipkarte, insbesondere einer SIM, MultiSIM oder UICC, auf einem Display des mobilen Kommunikationsgeräts unter Umgehung eines Speichers, Betriebssystems und Hauptprozessors des mobilen Kommunikationsgeräts, insbesondere nicht-speicherresident;
Eingeben der, insbesondere nicht-speicherresident, angezeigten ersten Transaktionsnummer (STAN) durch einen Benutzer in ein Online-Terminal;
Übertragen der ersten Transaktionsnummer (STAN) von dem Online-Terminal zu dem Bankserver;
Übertragen der Zufallszahl (RAND) und der Identifikation des mobilen Kommunikationsgeräts von dem Bankserver zu der Netzwerkentität; und
Übertragen der zweiten Transaktionsnummer (XTAN) von der Netzwerkentität zu dem Bankserver.

19. Verfahren (40) nach Anspruch 16, ferner mit den Schritten:
Übertragen der Zufallszahl (RAND) über ein Mobilfunknetz von dem Bankserver zu dem mobilen Kommunikationsgerät;
Anzeigen der ersten Transaktionsnummer (STAN) durch einen Mikroprozessor einer integrierten Chipkarte, insbesondere einer SIM, MultiSIM oder UICC, auf einem Display des mobilen Kommunikationsgeräts unter Umgehung eines Speichers, Betriebssystems und Hauptprozessors des mobilen Kommunikationsgeräts, insbesondere nicht-speicherresident;
Übertragen der insbesondere nicht-speicherresident angezeigten ersten Transaktionsnummer (STAN) durch einen Benutzer zu dem Bankserver via Telebanking, Telefonbanking oder Phone-Banking;
Übertragen der Zufallszahl (RAND) und der Identifikation des mobilen Kommunikationsgeräts von dem Bankserver zu der Netzwerkentität; und
Übertragen der zweiten Transaktionsnummer (XTAN) von der Netzwerkentität zu dem Bankserver.

20. Verfahren (40) nach Anspruch 16, ferner mit den Schritten:
Übertragen der Zufallszahl (RAND) über ein Mobilfunknetz von dem Bankserver zu dem mobilen Kommunikationsgerät;
Übertragen der ersten Transaktionsnummer (STAN) durch einen Mikroprozessor einer integrierten Chipkarte, insbesondere einer SIM, MultiSIM oder UICC, zu einem Online-Terminal über Nahfeldkommunikation (NFC);
Übertragen der ersten Transaktionsnummer (STAN) von dem Online-Terminal zu dem Bankserver;
Übertragen der Zufallszahl (RAND) und der Identifikation des mobilen Kommunikationsgeräts von dem Bankserver zu der Netzwerkentität; und
Übertragen der zweiten Transaktionsnummer (XTAN) von der Netzwerkentität zu dem Bankserver.
